# EUROPEAN PATENT SPECIFICATION

(11) **EP 3 330 159 B1**
(45) Date of publication and mention of the grant of the patent: **07.06.2023**
(21) Application number: 16832690.8
(22) Date of filing: 11.07.2016
(51) Int. Cl.: B61L 27/00, B60L 15/40, B60L 15/20, B60L 15/42

(54) **RAILWAY VEHICLE OPERATION ASSISTANCE DEVICE AND OPERATION ASSISTANCE METHOD**
VORRICHTUNG ZUR UNTERSTÜTZUNG DES BETRIEBS EINES SCHIENENFAHRZEUGS UND BETRIEBSUNTERSTÜTZUNGSVERFAHREN
DISPOSITIF D'AIDE À LA CONDUITE ET PROCÉDÉ D'AIDE À LA CONDUITE DE VÉHICULE FERROVIAIRE

(30) Priority: 31.07.2015 JP 2015151447
(43) Date of publication of application: 06.06.2018
(73) Proprietor: Hitachi, Ltd., Tokyo 100-8280 (JP)
(72) Inventor: FURUTANI Ryo, Tokyo 100-8280 (JP); IIHOSHI Yoichi, Tokyo 100-8280 (JP); MORITA Kiyoshi, Tokyo 100-8280 (JP)
(74) Representative: Mewburn Ellis LLP
(86) International application number: PCT/JP2016/070358
(87) International publication number: WO 2017/022411

(56) References cited:
- EP-A1- 2 650 857
- JP-A- 2003 037 904
- JP-A- 2003 037 904
- JP-A- 2004 357 399
- JP-A- 2010 088 249
- JP-A- 2010 088 249
- JP-A- 2013 071 579
- JP-A- 2013 071 579

## Description

### Technical Field

The technical field relates to an operation assistance of a railway vehicle.

### Background Art

With respect to the operation assistance of a railway vehicle, Patent Literature 1 discloses as follows: as the object "to provide an operation assistance monitor device for supporting an operation by performing the optimum driving guidance in consideration of a driving tendency or taste of a driver" (refer to Patent Literature 1 [0005]), and the operation assistance monitor device includes "data reading means for reading out driving history information including a driving operation history or a violation history peculiar to a driver and an authorization condition including a training history or a license renewal history peculiar to a driver, from a portable recording medium which the relevant driver holds; a history memory for accumulating the driving operation information collected during driving as new driving operation history information, when the relevant driver drives a vehicle; determination means for determining a driving tendency of the driver, based on the driving history information and the authorization condition read from the recording medium by the data reading means and the driving operation information collected during driving; notification means for notifying the operation assistance guidance for the driver by an image and/or voice, based on the driving tendency determined by the determination means, when a vehicle is driven by the driver; and data writing means for reading out the driving operation history information during running accumulated in the history memory for performing the processing of updating the information of the recording medium according to this driving operation history information, as the solving means" (refer to Patent Literature 1 [0006]) .

### Citation List

### Patent Literature

Patent Literature 1: Japanese Unexamined Patent Application Publication No. 2010-88249
Patent Literature 2: JP 2013 071579 A proposes a power control system which manages power consumption of a substation in a railway system.

### Summary of Invention

### Technical Problem

In the conventional technique, however, a system of assisting a vehicle operation technique of each driver in order to reduce the power consumption is not disclosed.

### Solution to Problem

In order to solve the above problem, the present invention provides in one aspect an operation assistance device according to claim 1, and in another aspect an operation assistance method according to claim 5.

### Advantageous Effects of Invention

According to the above means, it is possible to reduce the power consumption of a vehicle by a system of assisting a vehicle operation technique depending on each driver.

### Brief Description of Drawings

Fig. 1 is a constitutional example of a whole operation assistance system of a railway vehicle according to a first embodiment.
Fig. 2 is a constitutional example of a whole operation assistance device forming the operation assistance system shown in Fig. 1.
Fig. 3 is an example of an operation assistance flow on a vehicle side of the operation assistance system shown in Fig. 1.
Fig. 4 is an example of an operation assistance information creating flow on the ground side of the operation assistance system shown in Fig. 1.
Fig. 5 is an example of a system constitution of an operation assistance information presenting device shown in Fig. 1.
Fig. 6 is an example of a driving operation difference signal created from a target driving operation signal of an operation assistance section extracting device shown in Fig. 1 and a driver driving operation signal.
Fig. 7 is an example of analysis of the operation assistance information analyzing device shown in Fig. 1 and operation assistance parameter extraction.
Fig. 8 is an example of an operation assistance signal created from a driving operation difference signal of an operation assistance information creating device shown in Fig. 1 and the operation assistance information analytical result.
Fig. 9 is a constitutional example of the whole operation assistance system of a railway vehicle according to a second embodiment.
Fig. 10 is a constitutional example of the whole operation assistance system of a railway vehicle according to a third embodiment. Description of Embodiments

Hereinafter, embodiments will be described with reference to the drawings. In the drawings, the same numerals are attached to the components having the same functions and the overlapping description is omitted.

### First Embodiment

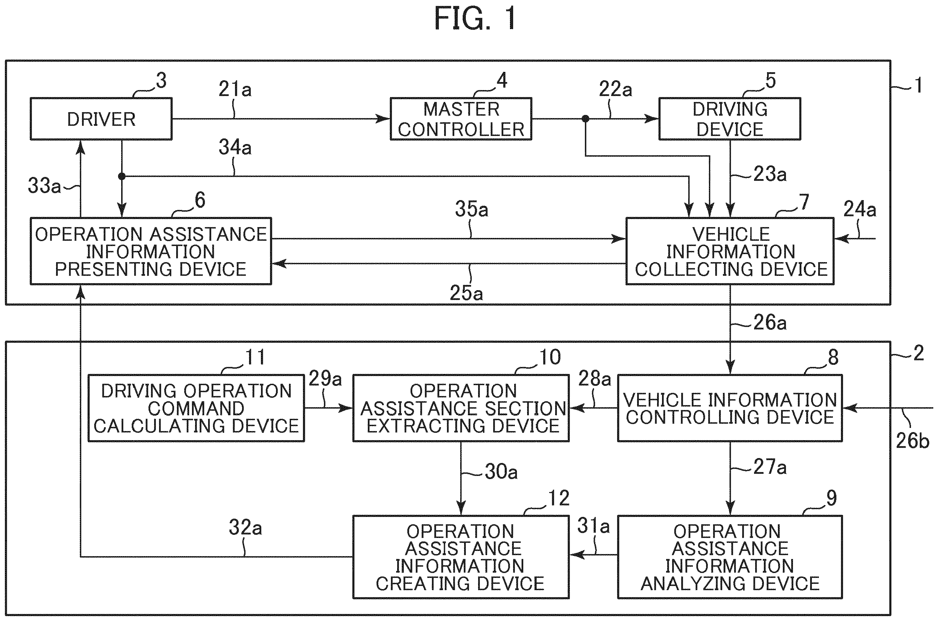

At first, a structure of a whole system of the embodiment will be described using Fig. 1. In Fig. 1, an operation assistance system is formed by a vehicle 1 and a ground-side information control system 2. The vehicle 1 includes a master controller 4 operated by the driver 3, a driving device 5, an operation assistance information presenting device 6, and a vehicle information collecting device 7, and the ground-side information control system 2 includes a vehicle information controlling device 8, an operation assistance information analyzing device 9, a driving operation command calculating device 11, an operation assistance section extracting device 10, and an operation assistance information creating device 12.

The driver 3 gets on the vehicle 1 and performs a driving operation 21a on the master controller 4 in order to drive the vehicle 1. The master controller 4 operated by the driver 3 outputs a driving command signal 22a to the driving device 5 which drives the vehicle 1. The driving device 5 is driven according to the driving command signal 22a of the master controller 4, and power consumption information 23a is output to the vehicle information collecting device 7. The vehicle information collecting device 7 collects the driving command signal 22a of the master controller 4, the power consumption information 23a of the driving device 5, driver identification information 34a for specifying the driver 3, and vehicle information 24a such as vehicle running speed, vehicle running position, distance, and mass and transmits the above to the ground-side information control system 2 as vehicle collecting information 26a.

The vehicle information controlling device 8 inputs the vehicle collecting information 26a of the vehicle 1 and the other vehicle collecting information 26b than other the vehicle 1, outputs driving information 28a including the power consumption information 23a, the driving command signal 22a, and traveling lane information to the operation assistance section extracting device 10, and outputs analysis information 27a including an operation assistance signal 35a to the operation assistance information analyzing device 9. The driving operation command calculating device 11 calculates a target driving operation signal 29a and outputs the above to the operation assistance section extracting device 10. The operation assistance section extracting device 10 inputs the target driving operation signal 29a and the driving information 28a, and outputs a driving command difference signal 30a. The operation assistance information analyzing device 9 inputs the analysis information 27a, and outputs an operation assistance analytical result 31a to the operation assistance information creating device 12. The operation assistance information creating device 12 inputs the driving difference signal 30a and the operation assistance analytical result 31a and transmits operation assistance program information 32a to the vehicle 1.

The operation assistance information presenting device 6 of the vehicle 1 inputs the operation assistance program information 32a and the vehicle information 25a including at least any of the vehicle running speed, the vehicle running position, the distance, and the mass collected by the vehicle information collecting device 7, outputs the operation assistance information 33a to the driver 3, and outputs the operation assistance signal 35a of the operation assistance information 33a to the vehicle information collecting device 7.

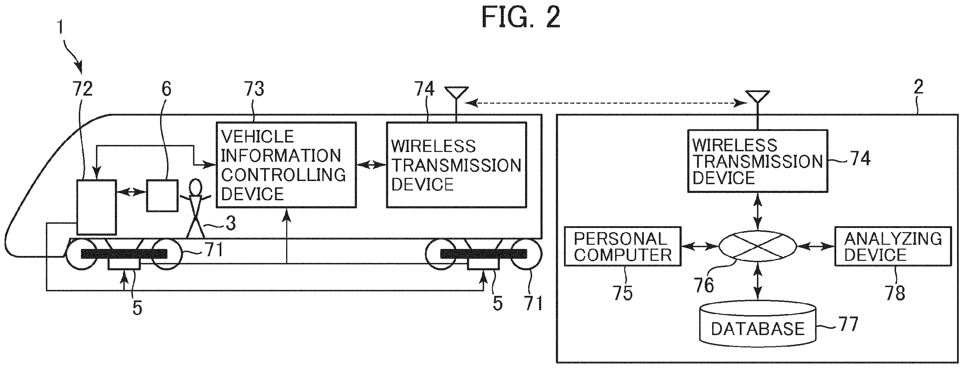

Next, the constitutional example of the whole operation assistance device of a railway vehicle forming the operation assistance system will be described using Fig. 2. In Fig. 2, a cab 72 of the vehicle 1 and the operation assistance information presenting device 6 are mutually coupled to each other, the cab 72 is coupled to the driving device 5 which drives wheels of a dolly 71, and the driving device 5 and the cab 72 are coupled to the vehicle information controlling device 73. The vehicle information controlling device 73 is also coupled to a wireless transmission device 74. The information about the vehicle 1 is accumulated in a database 77 of the ground-side control system 2 through the wireless transmission device 74 of the vehicle 1 and the wireless transmission device 74 of the ground-side information control system 2, and the information of the ground-side control system 2 is controlled by the vehicle information controlling device 73. The ground-side information control system 2 is formed by a personal computer 75, the database 77, and an analyzing device 78 through a network 76. Here, the vehicle information controlling device 73 is to monitor and control the operation information of auxiliary device such as an air conditioner and doors mounted in the vehicle. Here, the vehicle information collecting device 7 includes the vehicle information controlling device 73 and the wireless transmission device 74. The personal computer 75, the database 77, and the analyzing device 78 are to realize the functions of the vehicle information controlling device 8, the operation assistance information analyzing device 9, the operation assistance section extracting device 10, the driving operation command calculating device 11, and the operation assistance information creating device 12. The ground-side information control system 2 obtains information from a plurality of vehicles, and the personal computer 75 can control the analytical situation, analytical result, and analytical parameter of the analyzing device 78.

In this example, the analyzing device 78, the personal computer 75, and the database 77 are shown as separate units; however, all or one of them may be integrated as one unit. For example, the functions realized by the analyzing device 78 and the personal computer 75 may be formed into one unit. Further, the operation assistance information presenting device 6 coupled to the cab 72 may be formed as a portable terminal which is wirelessly coupled to the vehicle information controlling device 73.

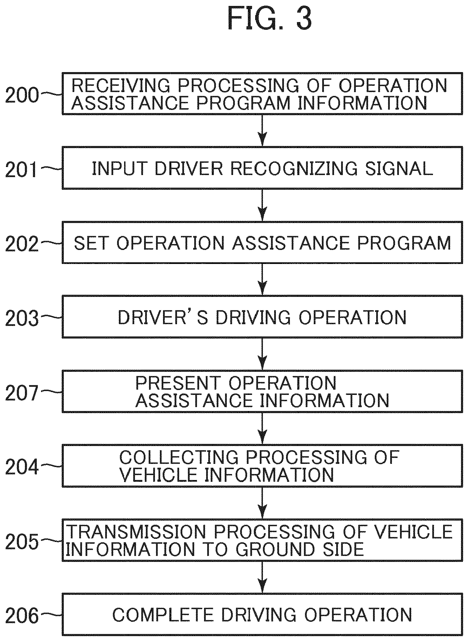

The operation assistance flow of a railway vehicle on the vehicle side will be described using the flow chart of Fig. 3. At first, on the vehicle side, the operation assistance information presenting device 6 receives the operation assistance program information 32a from the ground-side information control system 2 through the wireless transmission device 74 during stop of the vehicle (200). The driver 3 may carry a portable terminal with the operation assistance program information 32a input there and the driver 3 himself may input the operation assistance program information 32a in the operation assistance information presenting device 6.

Then, the driver gets on a predetermined vehicle and inputs a driver recognizing signal 34a for recognizing the individual in the cab 72 (201) . Here, the driver recognizing signal may be an ID number for identifying a driver. Each driver ID may be input from a display screen of the cab 3, or may be input from a reading device of fingerprints inherent in each driver in order to avoid the input mistake of the driver ID, or may be input from a reading device of the information of the inherent ID card belonging to each driver.

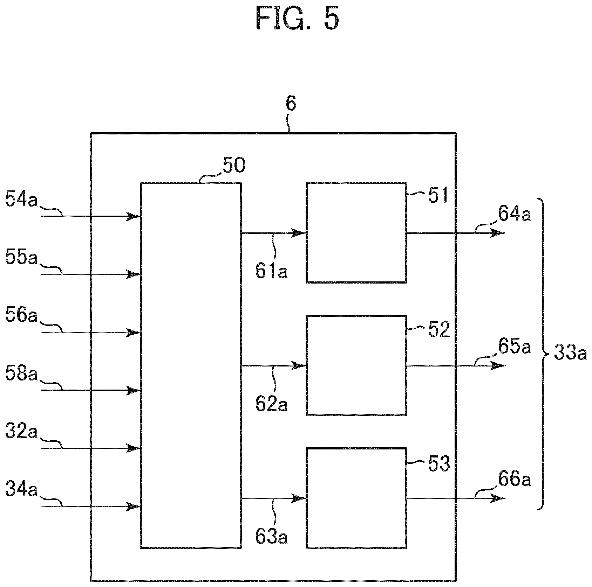

Next, the operation assistance information presenting device 6 sets a calculation program which is presented to the driver 3, in an operation assistance information calculating device 50, based on the input driver identification signal 34a and operation assistance program information 32a (202). The operation assistance information calculating device 50 which the operation assistance information presenting device 6 has will be specifically described in Fig. 5.

Next, the driver 3 operates the vehicle 1 by the master controller 4 (203) ; the operation assistance information 33a is presented to the driver 3 from the operation assistance information presenting device 6 (207); the vehicle information including any of the vehicle running speed, vehicle running position, distance, mass during the vehicle driving and the information such as the driving command signal and the power consumption information are collected by the vehicle information collecting device 7 (204); the collected vehicle information 26a is transmitted to the ground-side control system 2 on the ground side (205) . Here, the collected vehicle information may be data transmitted to the ground side in real time, or may be gathered together for a specified period or at a specified position such as a station or a vehicle station and may be data transmitted collectively to the ground side. At the end, the driver 3 completes the driving operation 21a (206).

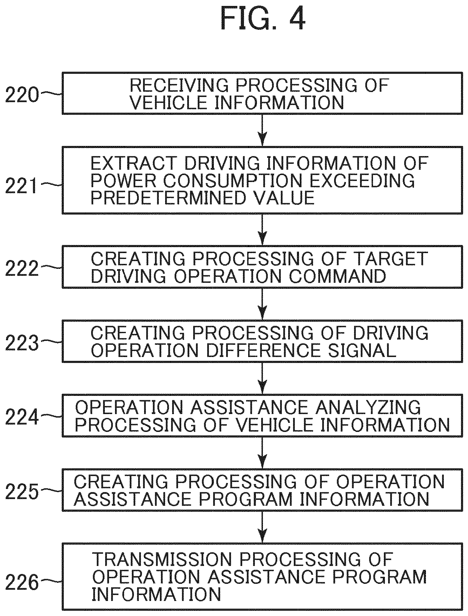

Next, the operation assistance information creating flow of a railway vehicle on the ground side will be described using the flow chart of Fig. 4. At first, the vehicle collecting information 26a, 26b transmitted from the vehicle 1 is received by the vehicle information controlling device 8 on the ground side (220). Next, the driving command signal corresponding to the power consumption information exceeding a defined value is extracted from the vehicle collecting information 26a, 26b received from the vehicle side by the operation assistance section extracting device 10 (221). Here, the driving command signal may be excluded from the operation assistance target in advance by including the history information of delay or accident.

Next, a run curve is calculated in order to make the power consumption a certain target value with respect to the extracted driving command signal, a target driving operation command of the master controller operated by the driver is calculated from the run curve calculation result (222), and the driving command difference signal 30a between the driving command signal corresponding to the power consumption information 23a exceeding the defined value and the target driving operation signal 29a is created (223). Here, the run curve and the target driving operation command are calculated using a numeric calculation simulation previously prepared.

Next, the operation assistance information effective in approximating the power consumption to a target value from the vehicle collecting information 26a and 26b collected by the vehicle 1 is analyzed by the operation assistance information analyzing device 9 (224), and the operation assistance program information 32a as for the driving command difference signal 30a is created, based on the operation assistance information analytical result 31a (225). At the last, the modified operation assistance program information 32a is transmitted from the ground-side information control system 2 to the vehicle 1 on the vehicle side (226). The modified operation assistance program information may be previously transmitted to a specified vehicle accompanied by the driver 3.

Next, the operation assistance information presenting device 6 will be described using a system view of Fig. 5. The operation assistance information presenting device 6 includes the operation assistance information calculating device 50 and further at least one of a voice guidance device 51, a display 52, and an inner force presentation device 53. The operation assistance information calculating device 50 inputs the operation assistance program information 32a, the driver identification information 34a, and the vehicle information 25a including the running position signal 54a, the vehicle speed signal 55a, the mass signal 56a, and the driver operating time signal 58a, and outputs an aural information assistance signal 61a, visual information assistance information 62a, and a tactile information assistance signal 63a from the operation assistance program information 32a corresponding to the driver identification information 34a. The voice guidance device 51 inputs the aural information assistance signal 61a and outputs the voice information 64a. The voice information 64a includes sound volume, frequency, and information presentation timing. The display 52 inputs the visual information assistance information 62a and outputs the display displaying information 65a. The display displaying information 65a includes color of display character, size of display character, flickering frequency of display character, and information presentation timing. The inner force presentation device 53 inputs the tactile information assistance signal 63a and outputs vibration information 66a. The vibration information 66a includes amplitude, frequency, and information presentation timing. Here, the voice guidance device 51 may be a microphone separately provided in the vicinity of the cab 71. The display 52 may be an exclusive display provided separately from the cab, or it may be displayed on the front screen of the vehicle 1. Further, the inner force presentation device 53 may be a portable terminal which the driver 3 always carries.

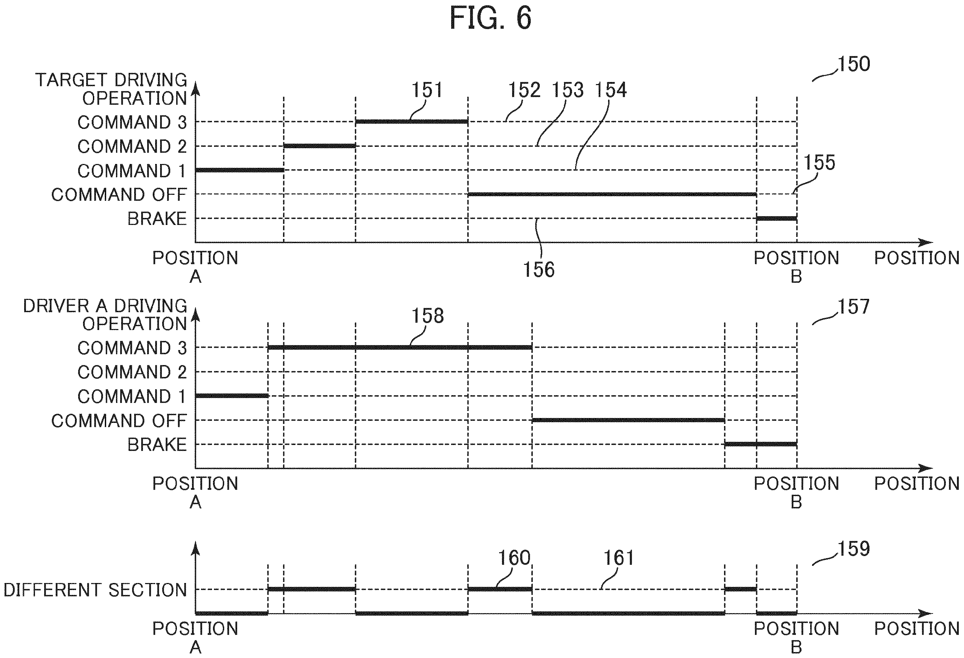

Next, one example of the driving operation difference signal created from the target driving operation signal and the driving command signal will be described using Fig. 6. In one example 150 of the target driving operation in a running section (position between A and B), assume that a driving command 1 (154), a driving command 2 (153), a driving command 3 (152) for accelerating the vehicle 1 by three steps, a brake command 156 for stopping the vehicle 1, and a driving command OFF (155) are selected as the driving operation 21a of the master controller 4, and that a target driving operation command 151 of the master controller 4 operated by the driver 3 is calculated from the run curve calculation result. Here, assume that the driver driving operation result 158 shown in one example 157 of the driving operation 21a by the driver 3 in the running section (position between A and B) is obtained. At this point, a difference signal 160 which specifies a section where the target driving operation command 151 does not agree with the driver driving operation result 158 is created. More detailed operation assistance information can be created in the operation assistance information creating device 12, by associating a feature section such as a tunnel section with the different section 161 by the difference signal 160 from the vehicle information 28a.

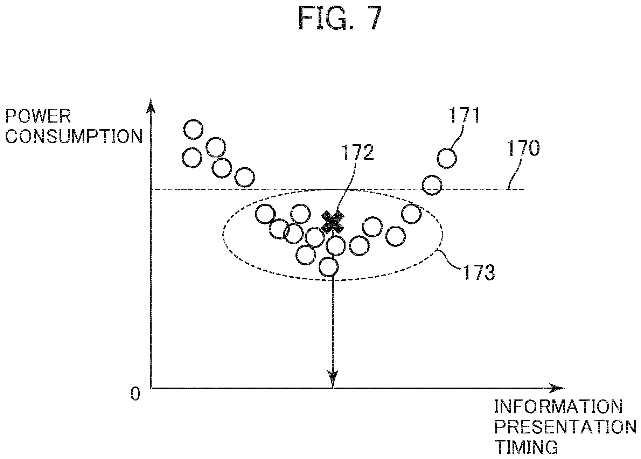

Next, one example of analysis of the operation assistance information analyzing device and the operation assistance parameter extraction is shown using Fig. 7. This figure is an example of showing a relation between the power consumption information 23a and the presentation timing of the operation assistance information with the driver 3 as an axis, and the operation assistance parameter effective as the operation assistance information is selected from the plot 171 of the figure. For example, the average value 172 of the plot group 173 having the smaller value than the power consumption threshold 170 is selected as the operation assistance parameter. Alternatively, the operation assistance information having the minimum power consumption may be selected as the operation assistance parameter. Alternatively, the analytical condition is based on the vehicle information 27a, the plot group based on the driver group having a long driving history, the plot group based on the driver operating time (fatigue degree), the plot group based on a specified lane feature amount (for example, a tunnel section), the plot group based on seasons, the plot group based on the operation assistance presentation times, or in the complex condition of the above plot groups, the average value 172 of the plot group 173 having the smaller value than the power consumption threshold 170 and the minimum value may be selected as the operation assistance parameter. Alternatively, in the complex condition of the operation assistance information (for example, a combination of the voice information and the display information and a combination of the sound volume and the frequency of the voice information and the voice information presentation timing), the average value 172 of the plot group 173 having the smaller value than the power consumption threshold 170 and the minimum value may be selected as the operation assistance parameter. Here, in the individual driver, until the sufficient operation assistance data is accumulated, the operation assistance information based on the operation assistance data of all the drivers may be created based on the analytical condition.

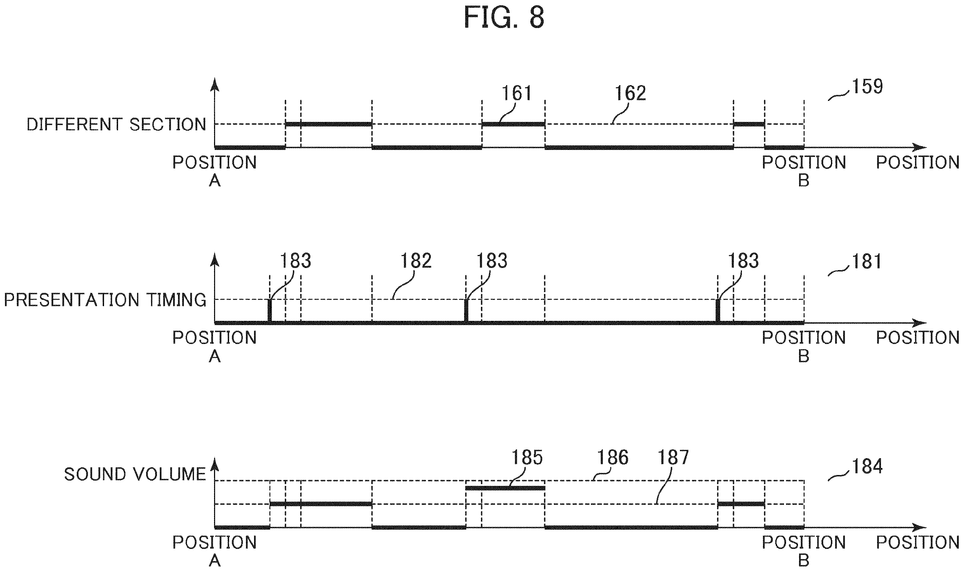

Next, one example of the operation assistance signal by the voice information created from the driving command difference signal and the operation assistance analytical result will be described using Fig. 8. The driving operation difference signal 159 in the figure is the same as the difference signal having been described in Fig. 6, and the operation assistance information is required for this different section. At this point, the presentation timing of the voice information is based on the operation assistance information analytical result having been described in Fig. 7, a sound presentation flag 183 is set, and the sound volumes 186 and 187 of the voice information 185 are to be presented during the period from the rising of the voice presentation flag 183 to the end of the different section 162. When the lane feature amount 186 such as the tunnel section and the lane feature amount 187 such as a light section are previously set in the different section 162, the sound volume based on the operation assistance information analytical result may be set in the lane feature amounts 186 and 187. Here, although only the voice information 64a is an object of the operation assistance information (sound volume and the presentation timing), only the display information may be the operation assistance information depending on the driver, or the display information 65a and the voice information 64a may be switched and presented as the operation assistance information, based on the different section 161 or may be presented in an overlapping way as the operation assistance information.

As mentioned above, according to the embodiment, just before entering the section where the target driving operation command 151 does not agree with the driver driving operation result 158, the operation assistance information can be presented at the presentation timing suitable for reducing the power consumption with respect to the relevant driver and the various conditions, and therefore, an energy-saving driving can be realized by presenting the optimum vehicle operation assistance information in order to reduce the power consumption depending on the respective drivers.

### Second Embodiment

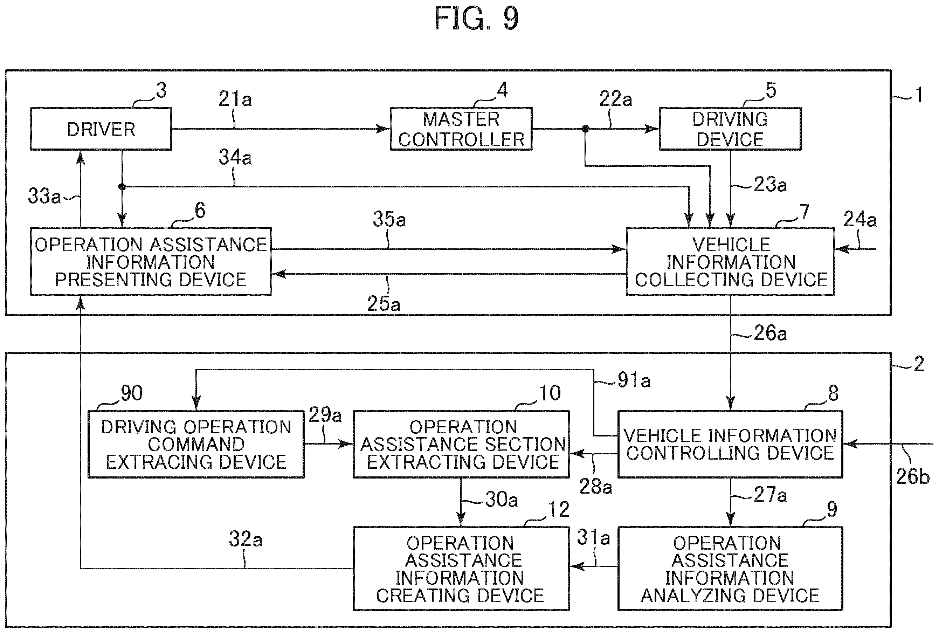

The constitutional example of the whole operation assistance system of a railway vehicle according to a second embodiment is shown in Fig. 9. Of the system constitutional view in Fig. 9, only the modified portions of the system constitutional view of Fig. 1 will be described. In Fig. 9, the vehicle information 91a such as the power consumption 23a, the driver 3, and the railway line information is output from the vehicle information controlling device 8 of the ground information control system 2 to the driving operation command extracting device 90, and the driving operation command extracting device 90 outputs the target driving signal 29a to the operation assistance section extracting device 10, instead of the driving operation command calculating device 11. By arranging the driving operation command extracting device 90 and the operation assistance section extracting device 11 in parallel, the target driving operation signal 29a may be created while switching the respective devices. For example, while the data amount is not fully accumulated, the target driving operation signal 29a is created by the numeric calculation simulation of the driving operation command calculating device 11; when the data amount is fully accumulated, the target driving operation signal 29a is created from the actual driving operation command of the driving operation command extracting device 90.

As mentioned above, according to the embodiment, by applying the driving operation result actually used as a direct target driving operation signal, without using a sophisticated numeric calculation simulation, it is possible to present the vehicle operation assistance information capable of realizing an energy-saving driving at ease and for a short period, to each driver.

### Third Embodiment

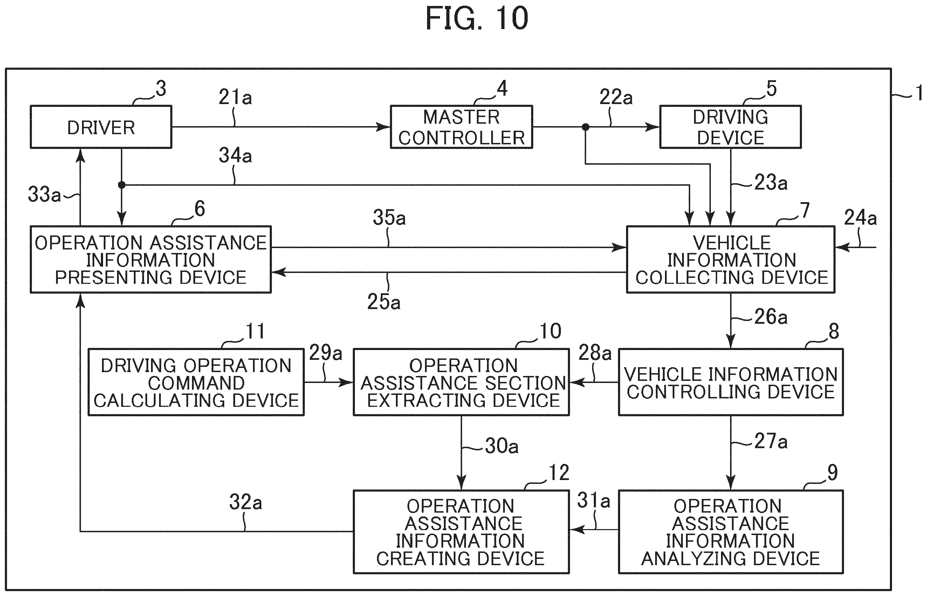

The constitutional example of the whole operation assistance system of a railway vehicle according to a third embodiment is shown in Fig. 10. Of the whole system constitutional view of Fig. 10, only the modified portions of the system constitutional view of Fig. 1 will be described. In Fig. 10, the vehicle information controlling device 8, the operation assistance information analyzing device 9, the operation assistance section extracting device 10, the driving operation command calculating device 11, and the operation assistance information creating device 12 formed by the ground-side information control system 2 are formed within the vehicle 1.

As mentioned above, according to the embodiment, it is possible to realize an energy-saving driving specialized in each vehicle property at a low cost, without using a large-scaled ground-side information control system.

### List of Reference Signs

1: vehicle
2: ground-side information control system
3: driver
4: master controller
5: driving device
6: operation assistance information presenting device
7: vehicle information collecting device
8: vehicle information controlling device
9: operation assistance information analyzing device
10: operation assistance section extracting device
11: driving operation command calculating device
12: operation assistance information creating device
21a: driving operation
22a: driving command signal
23a: power consumption information
24a: vehicle information including vehicle running speed, vehicle running position, distance, and mass
25a: vehicle information including vehicle running speed, vehicle running position, distance, and mass
26a: vehicle collecting information
26b: other vehicle collecting information
27a: analysis information
28a: driving information including driving command signal and travelling lane information
29a: target driving operation signal
30a: driving command difference signal
31a: operation assistance analytical result
32a: operation assistance program information
33a: operation assistance information
34a: driver identification information
35a: operation assistance signal
50: operation assistance information calculating device
51: voice guidance device
52: display
53: inner force presentation device
54: running position signal
55: vehicle speed signal
56: mass signal
58: driver operating time signal
61: aural information assistance signal
62: visual information assistance information
63: tactile information assistance signal
64: voice information
65: display displaying information
66: vibration information
71: dolly
72: cab
73: vehicle information controlling device
74: wireless transmission device
75: personal computer
76: network
77: database
78: analyzing device

## Claims

1. An operation assistance device of a railway vehicle for assisting a driver's vehicle operation, having an operation assistance information presenting device (6) to output operation assistance information in the form of voice information, visual information, tactile information or a combination thereof to a driver of a railway vehicle, the operation assistance information indicating a difference between a target driving operation signal and a driving command signal input by the driver, comprising:
a vehicle information controlling device (8) which records collected vehicle information including ID information of the driver, power consumption information consumed in a driving device of the railway vehicle, the driving command signal input by the driver through a controller, and operation assistance information output from the operation assistance information presenting device (6);
a driving operation command calculating device (11) which creates the target driving operation signal to realize a target power consumption;
a difference signal creating device (10) which extracts the driving command signal of the collected vehicle information in which power consumption information exceeds a predetermined power consumption from the collected vehicle information recorded in the vehicle information controlling device (8), and creates a difference signal between the driving command signal of the collected vehicle information and the target driving operation signal; **characterised in that** the operation assistance device further comprises an operation assistance information analyzing device (9) which obtains a presentation timing to the driver of the operation assistance information by selecting a presentation timing having a power consumption being not more than a threshold or being a minimum power consumption, according to a relationship between presentation timings of the operation assistance information and the power consumption information of the collected vehicle information, based on the driver ID information of the collected vehicle information; and
an operation assistance information creating device (12) which creates new operation assistance information, based on the presentation timing of the operation assistance information obtained by the operation assistance analyzing device (9) and the difference signal obtained by the difference signal creating device (10), and transmits the created new operation assistance information to the operation assistance information presenting device (6).

2. The operation assistance device of the railway vehicle according to claim 1,
wherein the operation assistance information presenting device (6) is arranged on the railway vehicle side, and
the vehicle information controlling device (8), the difference signal creating device (10), the operation assistance information analyzing device (9), the operation assistance information creating device (12), and the driving operation command calculating device (11) are arranged on a ground side.

3. The operation assistance device of the railway vehicle according to claim 1,
wherein the operation assistance information presenting device (6), the vehicle information controlling device (8), the difference signal creating device (10), the operation assistance information analyzing device (9), the operation assistance information creating device (12), and the driving operation command calculating device (11) are arranged on the railway vehicle side.

4. The operation assistance device of the railway vehicle according to any one of claims 1 to 3,
wherein when obtaining the presentation timing of the operation assistance information, the operation assistance information analyzing device (9) determines the presentation timing of the operation assistance information contributing to the power consumption being not more than a threshold or being a minimum power consumption, based on an average value of the presentation timings having the power consumption not more than the threshold, or a presentation timing having the minimum power consumption.

5. An operation assistance method of a railway vehicle for assisting a driver's vehicle operation, having an operation assistance information presenting device (6) to output operation assistance information in the form of voice information, visual information, tactile information or a combination thereof to a driver of a railway vehicle, the operation assistance information indicating a difference between a target driving operation signal and a driving command signal input by the driver, the method comprising:
recording collected vehicle information including ID information of the driver, power consumption information in a driving device of the railway vehicle, the driving command signal input by the driver through a controller, and operation assistance information output from the operation assistance information presenting device (6) ;
creating a target driving operation signal to realize a target power consumption;
extracting the driving command signal of the collected vehicle information in which the power consumption information exceeds predetermined power consumption, from the recorded collected vehicle information;
creating a difference signal indicating a difference between the driving command signal of the collected vehicle information and the target driving operation signal;
**characterised in that** the method further comprises the steps of obtaining a presentation timing to the driver of the operation assistance information by selecting an average presentation timing having a power consumption by the driver's operation being lower than a threshold or being a minimum power consumption, according to a relationship between presentation timings of the operation assistance information and the power consumption information of the collected vehicle information, based on driver ID information of the collected vehicle information; and
creating new operation assistance information based on the obtained presentation timing and the difference signal, and transmitting the created new operation assistance information to the operation assistance information presenting device.

## Patentansprüche

1. Vorrichtung zur Unterstützung des Betriebs eines Schienenfahrzeugs, um den Fahrzeugbetrieb eines Fahrers zu unterstützen, mit einer Betriebsunterstützungsinformationen-Präsentationsvorrichtung (6), um Betriebsunterstützungsinformationen in Form von Audioinformationen, visuellen Informationen, taktilen Informationen oder einer Kombination daraus an einen Fahrer eines Schienenfahrzeugs auszugeben, wobei die Betriebsunterstützungsinformationen eine Differenz zwischen einem Zielfahrtbetriebssignal und einem Fahrtbefehlssignal, das von dem Fahrer eingegeben wird, angeben, umfassend:
eine Fahrzeuginformationen-Steuervorrichtung (8), die gesammelte Fahrzeuginformationen, einschließlich ID-Informationen des Fahrers, Leistungsverbrauchsinformationen über den Verbrauch einer Fahrtvorrichtung des Schienenfahrzeugs, des von dem Fahrer durch eine Steuerung eingegebenen Fahrtbefehlssignals und der von der Betriebsunterstützungsinformationen-Präsentationsvorrichtung (6) ausgegebenen Betriebsunterstützungsinformationen, aufzeichnet;
eine Fahrtbetriebsbefehl-Berechnungsvorrichtung (11), die das Zielfahrtbetriebssignal erzeugt, um einen Zielleistungsverbrauch umzusetzen;
eine Differenzsignal-Erzeugungsvorrichtung (10), die das Fahrtbefehlssignal der gesammelten Fahrzeuginformationen, in denen die Leistungsverbrauchsinformationen einen vorbestimmten Leistungsverbrauch übersteigt, aus den in der Fahrzeuginformationen-Steuervorrichtung (8) aufgezeichneten gesammelten Fahrzeuginformationen extrahiert und ein Differenzsignal zwischen dem Fahrtbefehlssignal der gesammelten Fahrzeuginformationen und dem Zielfahrtbetriebssignal erzeugt;
**dadurch gekennzeichnet, dass** die Betriebsunterstützungsvorrichtung außerdem Folgendes umfasst:
eine Betriebsunterstützungsinformationen-Analysevorrichtung (9), die einen Präsentationszeitpunkt erhält, zu dem dem Fahrer die Betriebsunterstützungsinformationen präsentiert werden, durch das Auswählen eines Präsentationszeitpunkts mit einem Leistungsverbrauch, der einen Schwellenwert nicht übersteigt oder einen Mindestleistungsverbrauch darstellt, gemäß einer Beziehung zwischen Präsentationszeitpunkten der Betriebsunterstützungsinformationen und der Leistungsverbrauchsinformationen der gesammelten Fahrzeuginformationen auf Basis der Fahrer-ID-Informationen der gesammelten Fahrzeuginformationen; und
eine Betriebsunterstützungsinformationen-Erzeugungsvorrichtung (12), die neue Betriebsunterstützungsinformationen auf Basis des Präsentationszeitpunkts der Betriebsunterstützungsinformationen, die von der Betriebsunterstützungsinformationen-Analysevorrichtung (9) erhalten wurden, und des Differenzsignals, das von der Differenzsignal-Erzeugungsvorrichtung (10) erhalten wurde, erzeugt und die erzeugten neuen Betriebsunterstützungsinformationen an die Betriebsunterstützungsinformationen-Präsentationsvorrichtung (6) überträgt.

2. Vorrichtung zur Unterstützung des Betriebs eines Schienenfahrzeugs nach Anspruch 1, wobei die Betriebsunterstützungsinformationen-Präsentationsvorrichtung (6) schienenfahrzeugseitig angeordnet ist, und die Fahrzeuginformationen-Steuervorrichtung (8), die Differenzsignal-Erzeugungsvorrichtung (10), die Betriebsunterstützungsinformationen-Analysevorrichtung (9), die Betriebsunterstützungsinformationen-Erzeugungsvorrichtung (12) und die Fahrtbetriebsbefehl-Berechnungsvorrichtung (11) bodenseitig angeordnet sind.

3. Vorrichtung zur Unterstützung des Betriebs eines Schienenfahrzeugs nach Anspruch 1, wobei die Betriebsunterstützungsinformationen-Präsentationsvorrichtung (6), die Fahrzeuginformationen-Steuervorrichtung (8), die Differenzsignal-Erzeugungsvorrichtung (10), die Betriebsunterstützungsinformationen-Analysevorrichtung (9), die Betriebsunterstützungsinformationen-Erzeugungsvorrichtung (12) und die Fahrtbetriebsbefehl-Berechnungsvorrichtung (11) schienenfahrzeugseitig angeordnet sind.

4. Vorrichtung zur Unterstützung des Betriebs eines Schienenfahrzeugs nach einem der Ansprüche 1 bis 3, wobei die Betriebsunterstützungsinformationen-Analysevorrichtung (9) bei Erhalt des Präsentationszeitpunkts der Betriebsunterstützungsinformationen den Präsentationszeitpunkt der Betriebsunterstützungsinformationen, die dazu beitragen, dass der Leistungsverbrauch einen Schwellenwert nicht übersteigt oder einen Mindestleistungsverbrauch darstellt, auf Basis eines Mittelwerts der Präsentationszeitpunkte, bei denen der Leistungsverbrauch einen Schwellenwert nicht übersteigt, oder einen Präsentationszeitpunkts mit Mindestleistungsverbrauch bestimmt.

5. Verfahren zur Unterstützung des Betriebs eines Schienenfahrzeugs, um den Fahrzeugbetrieb eines Fahrers zu unterstützen, mit einer Betriebsunterstützungsinformationen-Präsentationsvorrichtung (6), um Betriebsunterstützungsinformationen in Form von Audioinformationen, visuellen Informationen, taktilen Informationen oder einer Kombination daraus an einen Fahrer eines Schienenfahrzeugs auszugeben, wobei die Betriebsunterstützungsinformationen eine Differenz zwischen einem Zielfahrtbetriebssignal und einem Fahrtbefehlssignal, das von dem Fahrer eingegeben wird, angeben, umfassend:
das Aufzeichnen von gesammelten Fahrzeuginformationen, einschließlich ID-Informationen des Fahrers, Leistungsverbrauchsinformationen einer Fahrtvorrichtung des Schienenfahrzeugs, des von dem Fahrer durch eine Steuerung eingegebenen Fahrtbefehlssignals und der von der Betriebsunterstützungsinformationen-Präsentationsvorrichtung (6) ausgegebenen Betriebsunterstützungsinformationen;
das Erzeugen eines Zielfahrtbetriebssignals, um einen Zielleistungsverbrauch umzusetzen;
das Extrahieren des Fahrtbefehlssignals der gesammelten Fahrzeuginformationen, in denen die Leistungsverbrauchsinformationen einen vorbestimmten Leistungsverbrauch übersteigt, aus den aufgezeichneten gesammelten Fahrzeuginformationen;
das Erzeugen eines Differenzsignals, das eine Differenz zwischen dem Fahrtbefehlssignal der gesammelten Fahrzeuginformationen und dem Zielfahrtbetriebssignal angibt;
**dadurch gekennzeichnet, dass** das Verfahren außerdem die folgenden Schritte umfasst:
das Erhalten eines Präsentationszeitpunkts, zu dem dem Fahrer die Betriebsunterstützungsinformationen präsentiert werden, durch das Auswählen eines mittleren Präsentationszeitpunkts mit einem Leistungsverbrauch durch den Betrieb des Fahrers, der einen Schwellenwert nicht übersteigt oder einen Mindestleistungsverbrauch darstellt, gemäß einer Beziehung zwischen Präsentationszeitpunkten der Betriebsunterstützungsinformationen und der Leistungsverbrauchsinformationen der gesammelten Fahrzeuginformationen auf Basis der Fahrer-ID-Informationen der gesammelten Fahrzeuginformationen; und
das Erzeugen neuer Betriebsunterstützungsinformationen auf Basis des erhaltenen Präsentationszeitpunkts und des Differenzsignals, und
das Übertragen der erzeugten neuen Betriebsunterstützungsinformationen an die Betriebsunterstützungsinformationen-Präsentationsvorrichtung.

## Revendications

1. Dispositif d'aide à la conduite d'un véhicule ferroviaire pour aider le conducteur à faire fonctionner son véhicule, comprenant un dispositif de présentation d'informations d'aide à la conduite (6) pour délivrer en sortie des informations d'aide à la conduite sous la forme d'informations vocales, d'informations visuelles, d'informations tactiles ou d'une combinaison de celles-ci à un conducteur d'un véhicule ferroviaire, les informations d'aide à la conduite indiquant une différence entre un signal d'opération de conduite cible et un signal d'instruction de conduite entré par le conducteur, comprenant :
un dispositif de commande d'informations de véhicule (8) qui enregistre des informations de véhicule collectées incluant des informations d'identifiant, ID, du conducteur, des informations de consommation d'énergie consommée dans un dispositif de conduite de véhicule ferroviaire, le signal d'instruction de conduite entré par le conducteur par l'intermédiaire d'un dispositif de commande, et des informations d'aide à la conduite provenant du dispositif de présentation d'informations d'aide à la conduite (6) ;
un dispositif de calcul d'instruction d'opération de conduite (11) qui crée le signal d'opération de conduite cible pour atteindre une consommation d'énergie cible ;
un dispositif de création de signal de différence (10) qui extrait le signal d'instruction de conduite à partir des informations de véhicule collectées où des informations de consommation d'énergie dépassent une consommation d'énergie prédéterminée à partir des informations de véhicule collectées enregistrées dans le dispositif de commande d'informations de véhicule (8), et crée un signal de différence entre le signal d'instruction de conduite des informations de véhicule collectées et le signal d'opération de conduite cible ;
**caractérisé en ce que** le dispositif d'aide à la conduite comprend en outre
un dispositif d'analyse d'informations d'aide à la conduite (9) qui obtient une temporisation de présentation au conducteur des informations d'aide à la conduite en sélectionnant une temporisation de présentation présentant une consommation d'énergie ne dépassant pas un seuil ou étant une consommation d'énergie minimale, selon une relation entre des temporisations de présentation des informations d'aide à la conduite et les informations de consommation d'énergie des informations de véhicule collectées, sur la base des informations d'ID de conducteur des informations de véhicule collectées ; et
un dispositif de création d'informations d'aide à la conduite (12) qui crée de nouvelles informations d'aide à la conduite, sur la base de la temporisation de présentation des informations d'aide à la conduite obtenues par le dispositif d'analyse d'aide à la conduite (9) et du signal de différence obtenu par le dispositif de création de signal de différence (10), et transmet les nouvelles informations d'aide à la conduite créées au dispositif de présentation d'informations d'aide à la conduite (6).

2. Dispositif d'aide à la conduite de véhicule ferroviaire selon la revendication 1,
dans lequel le dispositif de présentation d'informations d'aide à la conduite (6) est agencé côté véhicule ferroviaire, et
le dispositif de commande d'informations de véhicule (8), le dispositif de création de signal de différence (10), le dispositif d'analyse d'informations d'aide à la conduite (9), le dispositif de création d'informations d'aide à la conduite (12), et le dispositif de calcul d'instruction d'opération de conduite (11) sont agencés côté sol.

3. Dispositif d'aide à la conduite de véhicule ferroviaire selon la revendication 1,
dans lequel le dispositif de présentation d'informations d'aide à la conduite (6), le dispositif de commande d'informations de véhicule (8), le dispositif de création de signal de différence (10), le dispositif d'analyse d'informations d'aide à la conduite (9), le dispositif de création d'informations d'aide à la conduite (12), et le dispositif de calcul d'instruction d'opération de conduite (11) sont agencés côté véhicule ferroviaire.

4. Dispositif d'aide à la conduite de véhicule ferroviaire selon l'une quelconque des revendications 1 à 3,
dans lequel, lors de l'obtention de la temporisation de présentation des informations d'aide à la conduite, le dispositif d'analyse d'informations d'aide à la conduite (9) détermine la temporisation de présentation des informations d'aide à la conduite contribuant à ce que la consommation d'énergie ne soit pas supérieure à un seuil ou soit une consommation d'énergie minimale, sur la base d'une valeur moyenne des temporisations de présentation présentant la consommation d'énergie ne dépassant pas le seuil, ou d'une temporisation de présentation présentant la consommation d'énergie minimale.

5. Procédé d'aide à la conduite d'un véhicule ferroviaire pour aider à la conduite d'un véhicule ferroviaire, présentant un dispositif de présentation d'informations d'aide à la conduite (6) pour délivrer en sortie des informations d'aide à la conduite sous la forme d'informations vocales, d'informations visuelles, d'informations tactiles ou d'une combinaison de celles-ci à un conducteur d'un véhicule ferroviaire, les informations d'aide à la conduite indiquant une différence entre un signal d'opération de conduite cible et un signal d'instruction de conduite entré par le conducteur, le procédé comprenant les étapes consistant à :
enregistrer des informations de véhicule collectées incluant des informations d'ID du conducteur, des informations de consommation d'énergie dans un dispositif de conduite du véhicule ferroviaire, le signal d'instruction de conduite entré par le conducteur par l'intermédiaire d'un dispositif de commande, et des informations d'aide à la conduite délivrées en sortie par le dispositif de présentation d'informations d'aide à la conduite (6) ;
créer un signal d'opération de conduite cible pour atteindre une consommation d'énergie cible ;
extraire le signal d'instruction de conduite des informations de véhicule collectées où les informations de consommation d'énergie dépassent une consommation d'énergie prédéterminée, à partir des informations de véhicule collectées enregistrées ;
créer un signal de différence indiquant une différence entre le signal d'instruction de conduite des informations de véhicule collectées et le signal d'opération de conduite cible ;
**caractérisé en ce que** le procédé comprend en outre les étapes consistant à :
obtenir une temporisation de présentation au conducteur des informations d'aide à la conduite en sélectionnant une temporisation de présentation moyenne présentant une consommation d'énergie par l'opération du conducteur inférieure à un seuil ou étant une consommation d'énergie minimale, selon une relation entre des temporisations de présentation des informations d'aide à la conduite et les informations de consommation d'énergie des informations de véhicule collectées, sur la base des informations d'ID de conducteur des informations de véhicule collectées ; et
créer de nouvelles informations d'aide à la conduite sur la base de la temporisation de présentation obtenue et du signal de différence, et
transmettre les nouvelles informations d'aide à la conduite créées au dispositif de présentation d'informations d'aide à la conduite.
